# EUROPEAN PATENT APPLICATION

(11) **EP 0 692 295 A1**
(43) Date of publication of application: **17.01.1996**
(21) Application number: 94202010.8
(22) Date of filing: 11.07.1994
(51) Int. Cl.: B01D 53/08, B01D 46/32, B01J 8/12

(54) **Device for contacting gas with granular material**

(71) Applicant: SHELL INTERNATIONALE RESEARCH MAATSCHAPPIJ B.V., NL-2596 HR Den Haag (NL)
(72) Inventor: Vervoorn, Johannes Leendert Cornelis Marinus, NL-2831 BK Gouderak (NL)

(57) **Abstract**

A device for contacting gas with granular material comprising a box (2') for containing the granular material having a particle inlet for granular material at its upper end and a particle outlet for granular material at its lower end, and two gas permeable side walls (8' and 9') arranged at opposite sides of the box (2'), wherein the angle (30) between the horizontal plane (31) and the upstream gas permeable side wall (8') is between 100° and 140°.

## Description

The present invention relates to a device for contacting gas with granular material comprising a box for containing the granular material provided with a particle inlet for receiving granular material at its upper end and a particle outlet for discharging granular material at its lower end, and with two gas permeable side walls arranged at opposite sides of the box. Such a device is shown in the book "Chemical Engineer's Handbook", R H Perry and C H Chilton, fifth edition, 1973, figure 20-104. In the known device the gas permeable side walls are vertical.

The device can be used as a granular-bed filter to remove dispersed particles from a gas. The device can also be used as an adsorber to remove gaseous pollutants from a gas by means of adsorption. The device can further be used as a reactor, for example, to remove gaseous pollutants by means of a chemical reaction. An example of the latter application is removing of nitrogen oxides from a gas in the presence of a suitable catalyst, wherein a reducing agent in the form of ammonia is added to the gas.

During normal operation gas flows from the upstream gas permeable side wall through the bed of granular material present in the box to the downstream gas permeable side wall from where treated gas leaves the box. Granular material is supplied to the particle inlet at the upper end of the box, the granular material flows from the top of the box to its bottom, and it is withdrawn from the box through the particle outlet.

When the device is used as a granular filter bed, the granular material which moves through the bed is loaded with dust, and the material has to be continuously refreshed at such a rate that the dust level in the treated gas does not exceed a predetermined level. The granular material near the upstream gas permeable wall is directly receiving the dust from the gas, and the velocity of this material determines the loading of this material.

Applicant has studied the flow of granular material through the box, and found that the velocity of the granular material moving through the box varied over the width of the box such that near the gas permeable side walls the velocity was considerably lower than in the centre of the box. As a result granular material withdrawn from the box contained highly loaded material from the part of the bed near the upstream gas permeable side wall and only partially loaded material from the remainder of the bed.

It is an object of the present invention to withdraw from the box granular material that is more evenly loaded with dust. In order to do so Applicant found that the velocity of granular material in the box should be such that the velocity of granular material in the part of the bed near the upstream gas permeable side wall is larger than the velocity in the remainder of the bed.

To this end the device for contacting gas with granular material according to the present invention comprises a box for containing the granular material provided with a particle inlet for receiving granular material at its upper end and a particle outlet for discharging granular material at its lower end, and with two gas permeable side walls arranged at opposite sides of the box, wherein the angle between the horizontal plane and the upstream gas permeable side wall is between 100° and 140°.

It was found that the effect of tilting the box in the direction of the gas flow through the bed so that the angle between the horizontal plane and the upstream gas permeable side wall is between 100° and 140° is that the velocity in the upstream part of the bed was higher than in the remainder of the moving bed.

The optimal size of the lower limit of the angle between the horizontal plane and the upstream gas permeable side wall depends on the angle of repose of the granular material, however, for most applications the lower limit is about 100°. The optimal size of the upper limit of the angle between the horizontal plane and the upstream gas permeable side wall is about 140°.

In the above, an example was given of the use of the device as a dust filter, however, the same applies in other applications where, during normal operation, the granular material gets loaded, and in applications where during normal operation the functionality of the granular material decreases.

The invention will now be described in more detail with reference to the accompanying drawings, wherein
Figure 1 shows schematically a vertical section over the width of part of the known device;
Figures 1a and 1b show the flow profiles in the bed of granular material for the device of Figure 1;
Figure 2 shows schematically a vertical section over the width of part of the device according to the present invention; and
Figures 2a and 2b show the flow profiles in the bed of granular material for the device of the present invention according to Figure 2.

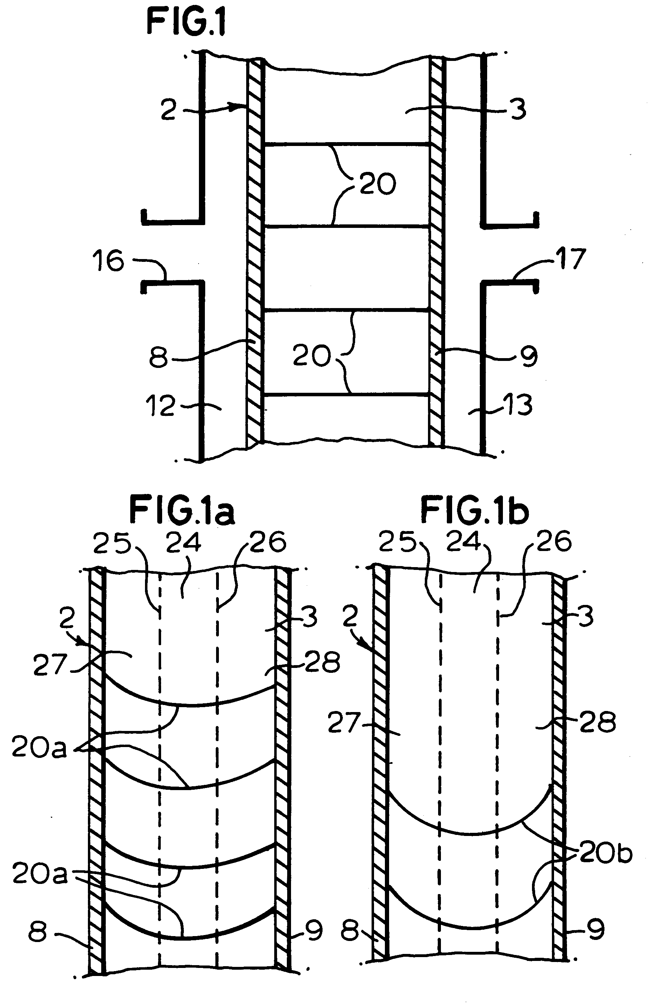

Reference is now made to Figure 1, showing schematically a vertical section of part of the known device for contacting gas with granular material. The device comprises a vertical box 2 filled with a bed of granular material indicated with reference numeral 3. The upper end of the box 2 is provided with a particle inlet (not shown) for supplying granular material to bed and the lower end is provided with a particle outlet (not shown) for withdrawing granular material from the bed 3 of granular material. The particle outlet can be provided with a suitable flow control device, such as a rotary valve or star valve (not shown).

The box 2 is furthermore provided with two vertical gas permeable side walls arranged at opposite sides of the box 2, an upstream gas permeable side wall 8 and a downstream gas permeable side wall 9.

The device further includes a gas inlet chamber 12 of which one wall is formed by the upstream gas permeable side wall 8, a gas outlet chamber 13 of which one wall is formed by the downstream gas permeable side wall 9, a gas inlet 16 communicating with the gas inlet chamber 12, and a gas outlet 17 communicating with the gas outlet chamber 13.

During normal operation the gas to be treated is supplied to the gas inlet 16, and gas flows from the upstream gas permeable side wall 8 through the bed 3 of granular material present in the box 2 to the downstream gas permeable side wall 9, and it is withdrawn from the box through gas outlet 17. Granular material is supplied to the bed 3 through the particle inlet, and it flows from the top of the box 2 to its bottom. Loaded or spent granular material is removed from the box 2 through the particle outlet. The particle inlet and outlet are so designed that almost no gas escapes through the particle inlet or the particle outlet.

To illustrate the differences in velocities of the granular material in the bed 3, the following experiment was carried out. The box 2 was filled with granular material having an angle of repose of 60°. At regular intervals in the bed 3 a thin, horizontal layer of the granular material with a different colour was arranged, these thin layers are referred to with reference numeral 20. During the experiment fresh granular material was supplied to the top of the box 2. Figures 1a and 1b show the flow profiles in the moving bed of the known device at subsequent stages, wherein the reference numerals 20a and 20b refer to the deformed horizontal layers 20 of Figure 1. In this experiment the average velocity in the middle section 24 of the bed, defined between the dashed lines 25 and 26 was 72 per cent of the average velocity in the bed 3, and the average velocity in each of the sections 27 and 28 along the side walls of the box 2 was only 14 per cent of the average velocity in the bed 3.

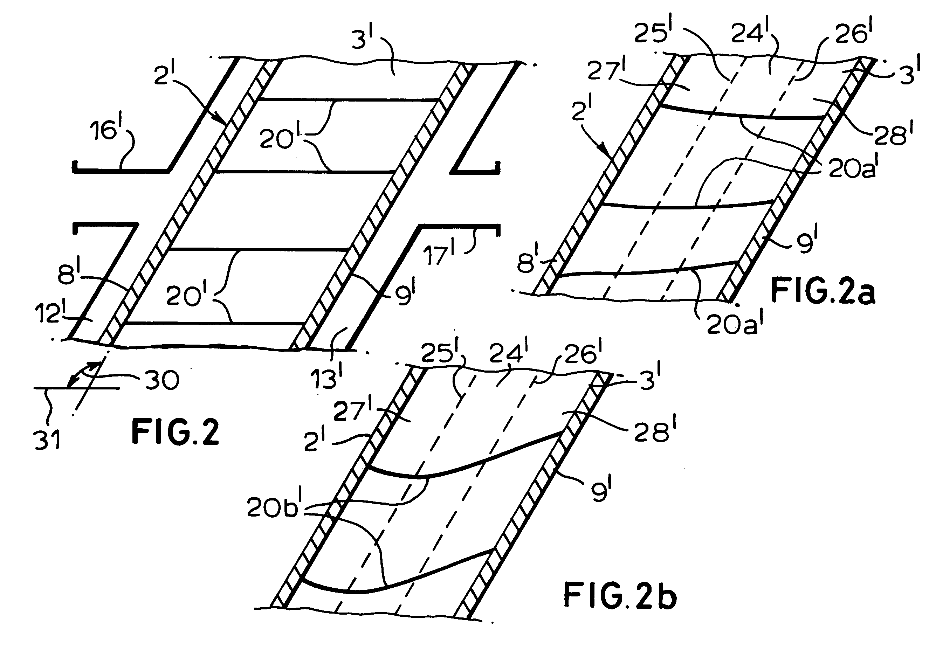

Reference is now made to Figure 2, showing schematically the device for contacting gas with granular material according to the present invention. Features which are identical to features of the device as described with reference to Figure 1 have got the same reference numerals provided with an apostrophe. The difference between the known device and the device according to the invention is that the box of the device according to the invention is tilted in the direction of the gas flow through the bed so that the angle 30 between the horizontal plane 31 and the upstream gas permeable side wall 8' is between 100° and 140°. The operation of the device according to the present invention is the same as the operation of the known device.

The experiment as described above was carried out with the device of the present invention, and the result showed the surprising effect of tilting the box in the direction of the gas flow. The box 2' was filled with granular material having an angle of repose of 60°, and at regular intervals in the bed 3' a thin, horizontal layer of the granular material with a different colour was arranged, these thin layers are referred to with reference numeral 20'. The box 2' was tilted so that the angle 30 between the horizontal plane 31 and the upstream gas permeable side wall 8 was 120°. During the experiment fresh granular material was supplied to the top of the box 2'. Figures 2a and 2b show the flow profiles in the moving bed of the device according to the present invention at subsequent stages, wherein the reference numerals 20a' and 20b' refer to the deformed horizontal layers 20' of Figure 2. In this experiment the average velocity in the middle section 24' of the bed was 36 per cent of the average velocity in the bed 3', the average velocity in the upstream section 27' was 53 per cent of the average velocity in the bed 3', and the average velocity in the downstream section 28' was only 11 per cent of the average velocity in the bed 3'.

These examples show the effect of tilting the box in accordance with the present invention. In the known device the velocities in the upstream part and the downstream part were considerably lower than the velocity in the middle part, whereas in the device according to the present invention the velocity in the upstream part of the bed was higher than in the remainder of the moving bed. As a result the granular material gets more evenly loaded with material from the gas passing through the moving bed.

The gas permeable side walls can be an arrangement of overlapping strips allowing gas to flow through the arrangement and preventing granular material from leaving the bed, or they can be made of flat plates provided with gas passages, wherein the size of the gas passages is such that granular material cannot pass through the gas passages. The design of the gas permeable side walls is not relevant to the device of the present invention and is therefore not further discussed.

## Claims

1. A device for contacting gas with granular material comprising a box for containing the granular material provided with a particle inlet for receiving granular material at its upper end and a particle outlet for discharging granular material at its lower end, and with two gas permeable side walls arranged at opposite sides of the box, wherein the angle between the horizontal plane and the upstream gas permeable side wall is between 100° and 140°.

2. Device according to claim 1, wherein the gas permeable side walls are parallel to each other.
